# EUROPÄISCHE PATENTSCHRIFT

(11) **EP 3 793 893 B1**
(45) Veröffentlichungstag und Bekanntmachung des Hinweises auf die Patenterteilung: **21.02.2024**
(21) Anmeldenummer: 19728874.9
(22) Anmeldetag: 11.04.2019
(51) Int. Cl.: B63B 35/66, B63J 3/02, B63H 5/08, B63H 23/08, B63H 23/12, B63H 23/18, B63H 23/16

(54) **ANTRIEBSSYSTEM EINES SCHIFFES**
DRIVE SYSTEM FOR A SHIP
SYSTÈME D'ENTRAÎNEMENT D'UN NAVIRE

(30) Priorität: 14.05.2018 DE 102018111402
(43) Veröffentlichungstag der Anmeldung: 24.03.2021
(73) Patentinhaber: Schottel GmbH, 56322 Spay/Rhein (DE)
(72) Erfinder: SCHOLZ, Sascha, 51503 Rösrath (DE)
(74) Vertreter: Wagner Albiger & Partner Patentanwälte mbB
(86) Internationale Anmeldenummer: PCT/EP2019/059205
(87) Internationale Veröffentlichungsnummer: WO 2019/219305

(56) Entgegenhaltungen:
- EP-A1- 0 246 631
- EP-A1- 0 249 208
- DE-A1- 10 034 656
- FR-A- 586 050
- GB-A- 926 560
- GB-A- 1 269 043
- RU-C2- 2 499 726

## Beschreibung

Die Erfindung betrifft ein Antriebssystem für ein Schiff, umfassend mindestens zwei Propulsionsanlagen, wobei jede Propulsionsanlage einen Propeller sowie einen Antriebsmotor mit einem nachgeschalteten Oberwassergetriebe zum Antrieb des Propellers aufweist.

Schiffe werden je nach Art ihres Transport- oder Arbeitszwecks sehr unterschiedlich eingesetzt. Dabei gibt es bei jedem Schiff bei jeder Fahrt oftmals wechselnde Einsatz- und Betriebsarten, wie zum Beispiel An- und Ablegen, Positionieren, langsame Fahrt, schnelle Fahrt, dynamisches Positionieren, Ziehen oder Schieben, Fahren mit oder ohne Ladung sowie Spezialaufgaben, wie Feuer löschen, bei denen über kurze bis lange Dauer jeweils niedrige bis sehr hohe Propulsionsleistungen des Antriebssystems erforderlich sind.

Das Antriebssystem eines Schiffes zu dessen Fortbewegung umfasst Propulsionsanlagen, bei denen ein Antriebsmotor, der zum Beispiel als Verbrennungs- oder Elektromotor ausgebildet sein kann, mindestens einen unter der Wasseroberfläche befindlichen Propeller antreibt und auf diese Weise Vorschub für die Fortbewegung des Schiffes erzeugt. Zur Anpassung und Verbesserung dieser Propulsionsanlagen werden unterschiedliche Energiequellen für die Verbrennungsmotoren, wie Diesel, Schweröl und Gas, aktiv verstellbare Propeller, Unter- /Übersetzungsgetriebe, Umlenkungsgetriebe, Sammelgetriebe, einfache oder variable Kupplungen, elektrische Transformer, Generatoren, Elektromotoren, Batterien sowie unterschiedliche Steuerungssysteme eingesetzt.

Um dem Wechsel der Betriebsarten eines Schiffes möglichst optimal gerecht zu werden, sind verschiedene Propulsionsanlagen bekannt, die sich in Bezug auf deren Wirtschaftlichkeit, Betriebskosten, Wartungshäufigkeit, Komplexität, Raumbedarf etc. unterscheiden. Die bekannten Propulsionsanlagen sind häufig aufgrund der vielen erforderlichen Komponenten sehr komplex, haben sehr hohe Investitions- und Betriebskosten und benötigen unter Umständen großen Bauraum für die Installation, der - sofern er überhaupt zur Verfügung steht - mit Verlust von Laderaum einhergeht.

Zudem unterliegen moderne Schiffe immer strenger werdenden Auflagen und Gesetzen in Bezug auf die durch das Schiff verursachten Emissionen an zum Beispiel CO₂, NOx, SOₓ etc., die im Antriebssystem Berücksichtigung finden müssen und die Erfüllung der Auflagen und Gesetze bei möglichst jeder Betriebsart des Schiffes zu gewährleisten haben. Dabei sollen sowohl die Investitionskosten als auch die Betriebskosten, vor allem Treibstoffverbrauch sowie Wartungskosten minimiert werden. Dies wird von den bekannten Antriebssystemen nur unzureichend erfüllt.

Problematisch ist insbesondere die Auslegung des Antriebssystems für ein Schleppschiff, kurz auch als Schlepper bezeichnet. Derartige Schlepper dienen zum Positionieren anderer Schiffe, die aufgrund ihrer technischen Ausrüstung nicht selbst zu genauen Positionieren in der Lage sind oder bei denen aufgrund von Vorschriften und Gesetzen Schlepper zwingend zusätzlich erforderlich sind, um bestimmte Manöver, zum Beispiel An- und Ablegemanöver in einem Hafen auszuführen.

Der Betrieb eines solchen Schleppers zeichnet sich durch einen sehr hohen zeitlichen Anteil an niedriger erforderlicher Propulsionsleistung aus, zum Beispiel beim Transit zwischen Einsatzpositionen oder beim Warten auf einen Schleppauftrag und einen demgegenüber zeitlich sehr geringen Anteil an sehr hoher Propulsionsleistung, die beim eigentlichen Schleppen abgerufen wird. Da jedoch die abrufbare hohe Propulsionsleistung letztlich die Dimensionierung und Leistung des Antriebssystems bestimmt, sind derartige Schlepper während sehr großer Zeiträume ihres Betriebs mit überdimensionierten und sowohl unter wirtschaftlichen als auch unter Emissionsgesichtspunkten problematischen Antriebssystemen ausgerüstet.

Hinzu kommt, dass derartige Schlepper meist nur in Häfen oder Küstennähe operieren und somit häufig auch für (Feuer-) Notfälle als Feuerlöschboot operieren können müssen und zu diesem Zweck auch mit einem aufwändigen Feuerlöschsystem ausgerüstet sind, welches ebenfalls durch das Antriebssystem im Bedarfsfall mit angetrieben werden muss. Das Antriebssystem des Schleppers wird dadurch deutlich komplexer, als es für die eigentliche Aufgabe des Schleppers notwendig wäre.

Moderne Schlepper sind in der Regel mit mindestens zwei Propellern ausgestattet, die in der Regel als um die Hochachse endlos steuerbare Azimutantriebe, zum Beispiel als Ruderpropeller oder Z-Drive ausgeführt sind. Ein großer Teil der Wartungskosten eines Schiffes und insbesondere eines Schleppers entfällt auf die installierten Verbrennungsmotoren und diese hängen wiederum maßgeblich von deren Betriebsdauer ab. Es wird daher gefordert, die Betriebsdauer der Antriebsmotoren und die dadurch entstehenden Wartungskosten minimal zu halten.

Aus der FR 586 050 A ist eine Antriebsanordnung mit zwei Antriebsmotoren und zwei Propellern bekannt, die über eine Querwelle miteinander verbunden sind. Je nach gewünschter Antriebskonfiguration können die Antriebsmotoren ein- oder ausgekuppelt werden.

Die EP 0 249 208 A1 offenbart ebenfalls eine Antriebsanordnung mit zwei Antriebsmotoren und zwei zugeordneten Propellern, die über eine Verbindungswelle mit nicht schaltbaren Ausgleichskupplungen querverbunden sind.

Die EP 0 246 631 A1, RU 2 499 726 C2 und die GB 926 560 A offenbaren ebensolche Antriebsanordnungen mit zwei Antriebsmotoren und zwei zugeordneten Propellern, die über eine schaltbare Verbindungswelle querverbunden sind.

Aus der GB 1 269 043 A ist ein Ein- oder Zweischraubenantrieb eines Tankschiffes bekannt, bei dem mindestens ein langsam laufender Dieselmotor und mindestens ein mittelschnell laufender Dieselhilfsmotor zum Antrieb mindestens einer Schraube über ein Getriebe vorgesehen sind.

Schließlich offenbart die DE 100 34 656 A1 einen Hybridantrieb für Segelboote mit einem Verbrennungsmotor und einem aus dem KFZ-Sektor bekannten Getriebesynchronisationsstartgenerator, wobei zum Umschalten zwischen Vorwärts- und Rückwärtsfahrt ein Wendegetriebe im Antriebsstrang vorgesehen ist.

Aufgabe der Erfindung ist es, ein Antriebssystem für ein Schiff der eingangs genannten Art vorzuschlagen, welches die Nachteile des Standes der Technik überwindet und sich durch geringere Komplexität und damit verbunden geringere Wartungserfordernisse und entsprechende Kosten auszeichnet und nur geringen Raumbedarf aufweist.

Zur Lösung der gestellten Aufgabe schlägt die Erfindung ein Antriebssystem gemäß den Merkmalen des Patentanspruchs 1 vor.

Vorteilhafte Ausgestaltungen und Weiterbildungen der Erfindung sind Gegenstand der abhängigen Ansprüche.

Der erfindungsgemäße Vorschlag beruht darauf, dass das Antriebssystem mindestens zwei Propulsionsanlagen umfasst und jeder Antriebsmotor über eine schaltbare Kupplung mit dem zugeordneten Oberwassergetriebe verbindbar bzw. von diesem entkoppelbar ist, sodass je nach Schaltzustand der Kupplung entweder eine drehmomentübertragende Verbindung zwischen dem Antriebsmotor und dem Oberwassergetriebe hergestellt oder aufgehoben ist. Zwischen den Oberwassergetrieben ist erfindungsgemäß darüber hinaus ein weiterer schaltbarer Antriebsstrang vorgesehen, mittels dessen die Oberwassergetriebe in einem Schaltzustand koppelbar und gemeinsam antreibbar und in einem anderen Schaltzustand voneinander entkoppelbar sind.

Erfindungsgemäß verfügen somit beide Propulsionsanlagen über Oberwassergetriebe mit zwei statt wie üblich lediglich einem Krafteingang, wobei ein Krafteingang wie üblich mit dem zugehörigen Antriebsmotor schaltbar verbindbar ist und der andere Krafteingang über den zusätzlichen Antriebsstrang mit dem korrespondierenden anderen Krafteingang des benachbarten Oberwassergetriebes der nächsten Propulsionsanlage mechanisch koppelbar bzw. Drehmoment übertragend verbindbar ist.

Durch diese hinsichtlich Komplexität und Raumerfordernis nur geringfügige Modifikation des Antriebssystems durch Hinzufügung eines weiteren schaltbaren Antriebsstranges zwischen den Oberwassergetrieben werden auf überraschend einfache Weise zusätzliche Antriebsmodi eröffnet, die insbesondere den stark wechselnden Anforderungen eines Schleppers in besonderer Weise gerecht werden.

So ist es möglich, bei nur geringer angeforderter Propulsionsleistung, etwa im Transitbetrieb oder beim Warten bzw. dynamischen Positionieren eines mit zwei Propulsionsanlagen ausgerüsteten Schleppers einen der beiden Antriebsmotoren abzuschalten und mithilfe der vorgesehenen schaltbaren Kupplung vom zugeordneten Oberwassergetriebe zu entkoppeln und beide Oberwassergetriebe über den schaltbaren Antriebsstrang zu koppeln, sodass sie gemeinsam von dem weiterhin in Betrieb befindlichen verbleibenden Antriebsmotor angetrieben werden. Es ist offensichtlich, dass hierdurch signifikant Betriebsstunden sowie Kraftstoffbedarf des abgeschalteten Antriebsmotors eingespart werden können. Zugleich kann der verbleibende, gemeinsam antreibende Antriebsmotor mit entsprechend höherem Leistungsbedarf und damit näher an seinen optimalen Betriebsbedingungen betrieben werden, ohne dass Propulsionsleistung in diesem Teillastbereich verloren ginge.

Wird etwa zur Erledigung einer Schleppaufgabe hingegen maximale Propulsionsleistung benötigt, wird die Verbindung beider Oberwassergetriebe über den schaltbaren Antriebsstrang entkoppelt und somit aufgehoben und jede Propulsionsanlage separat in der gewohnten Weise über ihren eigenen Antriebsmotor mit der zur Verfügung stehenden maximalen Leistung angetrieben, in dem die zuvor aufgehobene unmittelbare Verbindung zwischen Antriebsmotor und Oberwassergetriebe wiederaufgenommen wird.

Darüber hinaus bietet die erfindungsgemäße Möglichkeit, beide Oberwassergetriebe mit ihren zugeordneten Propellern durch lediglich einen Antriebsmotor gemeinsam anzutreiben, auch eine höhere Betriebssicherheit, da das mit dem erfindungsgemäßen Antriebssystem ausgerüstete Schiff auch beim Ausfall eines Antriebsmotors vollständig manövrierfähig bleibt.

Sofern die Oberwassergetriebe durch den zugeschalteten Antriebsstrang gekoppelt und gemeinsam von lediglich einem Antriebsmotor angetrieben werden, eröffnet die Erfindung überdies die Möglichkeit, den nicht angekoppelten, gewissermaßen freigewordenen Antriebsmotor für andere Zwecke einzusetzen, beispielsweise zum Antrieb eines Nebenaggregats. Ein solches Nebenaggregat kann beispielsweise ein Generator für die Erzeugung elektrischer Energie zum Aufladen von Batterien für ein Hybridantriebssystem sein oder eine Löschwasserpumpe, sodass es möglich ist, beispielsweise einen als Feuerlöschboot eingesetzten Schlepper mit einem Antriebsmotor und gekoppelten Oberwassergetrieben zu positionieren und mit dem anderen Antriebsmotor mit bis zu 100 % seiner Leistung die Löschwasserpumpe anzutreiben.

Erfindungsgemäß ist der Antriebsstrang als Antriebswelle mit schaltbaren Kupplungen zwischen einem Oberwassergetriebe und der Antriebswelle ausgebildet, was an die erfindungsgemäße Ausgestaltung nur geringe bauliche Anforderungen stellt. Es sind zwei synchron schaltbare Kupplungen zwischen den Oberwassergetrieben und der Antriebswelle vorgesehen. Durch den Einsatz von synchron schaltbaren Kupplungen zwischen jedem Oberwassergetriebe und der Antriebswelle ist es überdies möglich, jeden der zur Verfügung stehenden Antriebsmotoren wahlweise für den gemeinsamen Antrieb der gekoppelten Oberwassergetriebe heranzuziehen.

Nach einem weiteren Vorschlag der Erfindung kann die Antriebswelle zusätzlich mit einem mit dieser in Wirkverbindung stehenden Antriebsmotor ausgerüstet sein. Als Antriebsmotor kommen jegliche Motorentypen in Betracht, z.B. ein Verbrennungsmotor oder Elektromotor, letzterer ggf. auch als elektrischer Generator betreibbar. Im Falle eines elektrischen Generators ist es möglich, bei gemeinsam angetriebenen und gekoppelten Oberwassergetrieben zusätzlich elektrische Energie zu erzeugen, die in das Bordnetz des Schiffes eingespeist und/oder zum Aufladen von Batterien für einen elektrischen Antriebsmotor verwendet werden kann.

Sofern ein Elektromotor mit der Antriebswelle in Wirkverbindung steht, ergibt sich auf besonders einfache Weise ein Hybridantrieb, der es ermöglicht, auch beide Antriebsmotoren der Propulsionsanlagen von den jeweils zugeordneten Oberwassergetrieben zu entkoppeln und beide Oberwassergetriebe rein elektrisch über die gekoppelte Antriebswelle des Antriebsstranges anzutreiben. Ferner kann auch ein Antriebsmotor der Propulsionsanlagen zum Antrieb beider Oberwassergetriebe angekuppelt betrieben werden und durch den Elektromotor auf der Antriebswelle des Antriebsstranges zusätzliches Drehmoment erzeugt werden.

Die vorgenannten Betriebsarten lassen sich kombinieren, wenn auf der Antriebswelle ein kombinierter Motor/Generator eingesetzt wird, der sowohl als Antriebsmotor wie auch als elektrischer Generator dienen kann.

Nach einem weiteren Vorschlag der Erfindung sind die Propulsionsanlagen als Azimutantrieb beispielsweise in Form von Ruderpropellern ausgebildet. Dabei ist es weiterhin vorteilhaft, wenn das Schiff einen entlang einer Wasserlinie im Wasser schwimmenden Schiffsrumpf aufweist und der Propeller jeder Propulsionsanlage unterhalb der Wasserlinie angeordnet ist und der Antriebsmotor sowie das Oberwassergetriebe innerhalb des Schiffsrumpfes angeordnet sind, sodass auch der erfindungsgemäß vorgesehene schaltbare Antriebsstrang innerhalb des Schiffsrumpfes vorgesehen sein kann.

Nach der Erfindung ist jedoch vorgesehen, den Antriebsstrang mit einem Wendegetriebe auszubilden, welches beispielsweise in den Antriebsstrang, z.B. dessen Ausführung als Antriebswelle integriert wird. Ein solches Wendegetriebe zwischen den beiden Oberwassergetrieben ruft an seinen beiden Getriebeein- bzw. -ausgängen eine Drehrichtungsumkehr hervor, so dass beide Oberwassergetriebe in gleichem Drehsinn angetrieben werden.

Ein solches Wendegetriebe kann beispielsweise in koaxialer Ausführung oder mit achsversetzten Wellen ausgeführt sein und beispielsweise Kegelräder oder Zylinderräder umfassen.

Nach einem weiteren Vorschlag der Erfindung ist das Wendegetriebe mit mindestens einer schaltbaren Kupplung an den Antriebsstrang an- bzw. von diesem abkuppelbar, um z.B. bei Nichtgebrauch zur Vermeidung von Planschverlusten abgekuppelt zu werden.

Weiterhin kann durch die erfindungsgemäße Anordnung eines Wendegetriebes im Antriebsstrang auch die oftmals durch die Schiffsrumpfgeometrie vorhandene Neigung der Propulsionsanlagen zueinander ausgeglichen werden. Übliche Neigungen sind beispielsweise etwa 12° zueinander. Durch Anordnung von Gelenkwellen zwischen dem jeweiligen Oberwassergetriebe und dem vorzugsweise mittig im Antriebsstrang angeordneten Wendegetriebe können derartige Neigungen problemlos ausgeglichen werden. Alternativ kann das Wendegetriebe auch unmittelbar mit entsprechend geneigten Achsen ausgebildet werden, wobei das Getriebegehäuse und der verwendete Radsatz entsprechend der am Einbauort vorhandenen Neigung der Propulsionsanlagen zueinander ausgelegt und gefertigt werden kann.

Weitere Ausgestaltungen und Einzelheiten der Erfindung werden nachfolgend anhand der Ausführungsbeispiele darstellenden Zeichnung erläutert. Es zeigen:
- Figur 1: in einer schematisierten Darstellung eine erste Ausführungsform eines erfindungsgemäßen Antriebssystems;
- Figur 2a: das Antriebssystem gemäß Figur 1 in einem ersten Schaltzustand, in dem das Wendegetriebe zwar vorhanden, aber nicht gezeigt ist;
- Figur 2b: das Antriebssystem gemäß Figur 1 in einem zweiten Schaltzustand;
- Figur 3: in einer schematisierten Darstellung eine weitere Ausführungsform eines erfindungsgemäßen Antriebssystems, in dem das Wendegetriebe zwar vorhanden, aber nicht gezeigt ist;
- Figur 4: die Heckansicht eines mit einem erfindungsgemäßen Antriebssystem ausgerüsteten Schiffes.

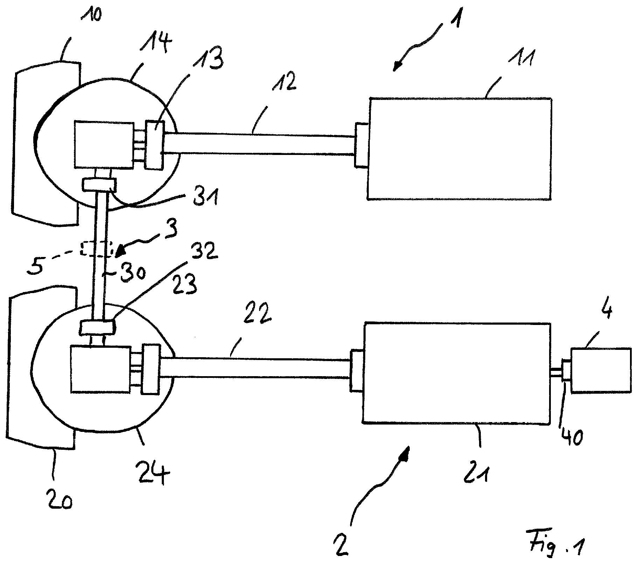

Aus der Figur 1 ist in einer stark schematisierten Darstellung ein Antriebssystem eines Schiffes, beispielsweise eines Schleppers dargestellt, welches zwei im Wesentlichen gleich aufgebaute Propulsionsanlagen 1, 2 umfasst, die jeweils als Ruderpropeller ausgeführt sind.

Jede dieser Propulsionsanlagen 1, 2 umfasst einen in nicht näher dargestellter Weise unterhalb der Wasserlinie befindlichen Propeller 10, 20, von dem im dargestellten Ausführungsbeispiel lediglich die umgebende Düse sichtbar ist, sowie ein mit dem Propeller 10, 20 verbundenes Oberwassergetriebe 14, 24, welches üblicherweise innerhalb des Schiffsrumpfes angeordnet ist. Jedem dieser Oberwassergetriebe 14, 24 der beiden Propulsionsanlagen 1 ist ein Antriebsmotor 11, 21 zugeordnet, der ebenfalls innerhalb des Schiffsrumpfes angeordnet ist und zum Beispiel als Diesel-Verbrennungsmotor ausgebildet sein kann. Der Antriebsmotor 11, 21 überträgt seine Antriebskraft bzw. das Drehmoment über eine Hauptantriebswelle 12, 22 auf das jeweilige Oberwassergetriebe 14, 24.

In an sich bekannter Weise ist damit der Antrieb in der Seitenansicht etwa "Z"-förmig geführt und wird vom Antriebsmotor 11, 21 bis zum jeweiligen Propeller 10, 20 zweifach um je 90° umgelenkt. Hierbei erstreckt sich zwischen dem Oberwassergetriebe 14, 24 und dem Propeller 10, 20 eine in den Zeichnungen nicht dargestellte Vertikalwelle, die vom Oberwassergetriebe 14, 24 aus dem Schiffsrumpf heraus zur nicht dargestellten Propellerachse geführt ist.

Der Antriebsmotor 11, 21 ist mit seiner Hauptantriebswelle 12, 22 jeweils an einem ersten Krafteingang des Oberwassergetriebes 14, 24 über eine schaltbare Kupplung 13, 23 angebunden, wobei in einer Schaltstellung der Kupplung 13, 23 eine kraftschlüssige Verbindung zwischen dem Antriebsmotor 11, 21 mit Hauptantriebswelle 12, 22 zum jeweiligen Oberwassergetriebe 14, 24 hergestellt ist und der Antriebsmotor 11, 21 in an sich bekannter Weise den zugeordneten Propeller 10, 20 über das jeweilige Oberwassergetriebe 14, 24 jeder einzelnen Propulsionsanlage 1, 2 gesondert antreibt. In einer anderen Schaltstellung der Kupplung 13, 23 ist diese kraftschlüssige Verbindung zwischen dem Antriebsmotor 11, 21 und dem jeweiligen Oberwassergetriebe 14, 24 aufgehoben, d. h. es werden keine Kräfte und Momente vom Antriebsmotor 11, 21 auf das nachgeordnete Oberwassergetriebe 14, 24 übertragen.

Darüber hinaus ist jedes Oberwassergetriebe 14, 24 mit einem weiteren sowohl als Krafteingang als auch als Kraftausgang dienenden Wellenende ausgebildet, an dem eine schaltbare Kupplung 31, 32 befestigt ist. Zwischen den beiden schaltbaren Kupplungen 31, 32 erstreckt sich eine Antriebswelle 30, die gemeinsam mit den endseitig angeflanschten Kupplungen 31, 32 einen die beiden Oberwassergetriebe 14, 24 verbindenden Antriebsstrang 3 bildet.

Die beiden Kupplungen 31, 32 des Antriebsstranges 3 sind so angeordnet, dass sie synchron, d. h. mit jeweils übereinstimmendem Schaltzustand, geschaltet werden können. In einem Schaltzustand der Kupplungen 31, 32 werden die beiden Oberwassergetriebe 14, 24 mit ihrem jeweiligen weiteren Krafteingang über die Antriebswelle 30 des Antriebsstrangs 3 miteinander gekoppelt, sodass Kräfte und Momente zwischen beiden Oberwassergetrieben 14, 24 über den Antriebsstrang 3 übertragen werden. Im anderen Schaltzustand der Kupplungen 31, 32 wird die Kopplung der beiden Oberwassergetriebe 14, 24 aufgehoben und es werden keine Kräfte und Momente zwischen den beiden Oberwassergetrieben 14, 24 über den Antriebsstrang 3 übertragen.

Man erkennt ferner, dass der zur mit Bezugszeichen 2 gekennzeichneten Propulsionsanlage gehörende Antriebsmotor 21 auf seiner der Hauptantriebswelle 22 abgewandten Seite über eine schaltbare Kupplung 40 auch einen Nebenantrieb 4, zum Beispiel eine Löschwasserpumpe antreibt.

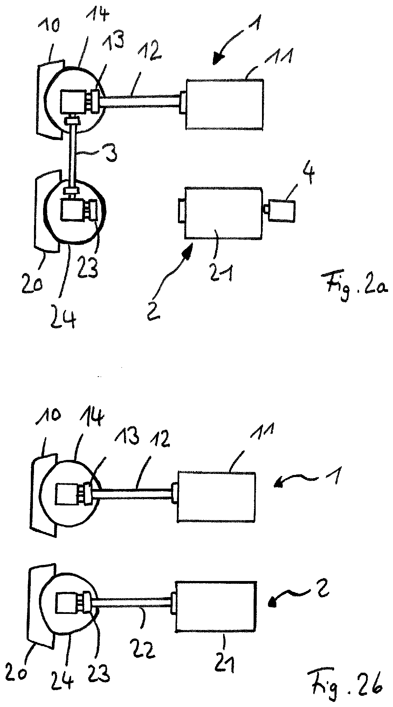

Aus dieser aus der Figur 1 ersichtlichen und vorangehend erläuterten Konfiguration ergeben sich die in den Figuren 2a und 2b schematisch dargestellten Betriebsmodi.

In einem Betriebsmodus gemäß Figur 2a wird das mit dem dargestellten Antriebssystem ausgerüstete Schiff, zum Beispiel ein Schlepper, bei nur geringer oder teilweiser Anforderung der maximalen Propulsionsleistung betrieben, wie es beispielsweise im Transit zwischen Schleppereinsätzen oder beim Warten und dynamischen Positionierungsbetrieb der Fall ist.

Im dargestellten Ausführungsbeispiel sind die Kupplungen 31, 32 des Antriebsstranges 3 geschlossen und der Antriebsstrang 3 überträgt Kräfte und Momente zwischen den beiden Oberwassergetrieben 14, 24. Ebenso ist die Kupplung 13 am Oberwassergetriebe 14 geschlossen und verbindet dieses Oberwassergetriebe 14 in der gewohnten Weise mit der Hauptantriebswelle 12 des Antriebsmotors 11 der Propulsionsanlage 1. Die Kupplung 23 der Propulsionsanlage 2 ist hingegen geöffnet, sodass kein Antrieb vom Antriebsmotor 21 auf das Oberwassergetriebe 24 im Rahmen der Propulsionsanlage 2 erfolgt. Dies ist in der Figur 1 dadurch dargestellt, dass die zur Drehmomentübertragung genutzte Hauptantriebswelle 22 gemäß Figur 1 nicht sichtbar ist. Dies soll jedoch lediglich den fehlenden Kraft- und Momentenfluss symbolisieren, der durch die geöffnete Kupplung 23 realisiert ist.

Somit werden im Betriebszustand gemäß Figur 2a beide Propeller 10, 20 entsprechend der Kraftanforderung ausschließlich vom Antriebsmotor 11 der Propulsionsanlage 1 gemeinsam angetrieben, in dem beide Propeller 10, 20 gewissermaßen in Reihenschaltung über den zusätzlichen Antriebsstrang 3 gekoppelt sind. Dabei nimmt das Oberwassergetriebe 14 die vom Antriebsmotor 11 über die Hauptantriebswelle 12 und die geschlossene Kupplung 13 aufgebrachte Propulsionsleistung am mit der Kupplung 13 verbundenen Krafteingang zu 100 % auf, gibt jedoch über den mit der Kupplung 31 gemäß Figur 1 verbundenen weiteren Krafteingang etwa 50 % dieser Propulsionsleistung an den Antriebsstrang 3 und den mit der Kupplung 32 verbundenen Krafteingang des Oberwassergetriebes 24 der Propulsionsanlage 2 und letztlich deren Propeller 20 weiter.

Währenddessen kann der Antriebsmotor 21 der 2. Propulsionsanlage 2 zur Verringerung des Kraftstoffverbrauchs und der Betriebsstunden abgeschaltet werden. Es ist offensichtlich, dass bei einer solchen Zusammenschaltung der Propeller 10, 20 und ihrer jeweiligen Oberwassergetriebe 14, 24 mittels des Antriebsstranges 3 auf lediglich einen Antriebsmotor 11 eine wesentlich kostengünstigere und weniger wartungsintensive Betriebsweise erreicht wird, als es bei Betrieb mit beiden Antriebsmotoren 11, 21 im jeweils niedrigen Teillastbereich der Fall wäre.

Überdies besteht in der Konfiguration gemäß Figur 2a die Möglichkeit, den nicht zum Antrieb der Propeller 10, 20 benötigten Antriebsmotor 21 der Propulsionsanlage 2 anderweitig einzusetzen, zum Beispiel bis zur Volllast zum Antrieb eines Nebenaggregats 4, etwa einer Löschwasserpumpe. Bei Feuerlöscheinsätzen ist in der Regel nur dynamisches Positionieren erforderlich, wofür der zusammengeschaltete Antrieb mittels des Antriebsmotors 11 ausreicht, sodass der freie Antriebsmotor 21 mit voller Leistung für den Betrieb der Löschpumpe 4 zur Verfügung steht. Die Komplexität der Feuerlöschausrüstung wird von daher erheblich verringert.

Wird hingegen vom Schiff die volle Propulsionsleistung angefordert, etwa bei einem Schlepper während des Schleppeinsatzes, wird der die Oberwassergetriebe 14, 24 verbindende Antriebsstrang 3 entkoppelt, in dem die beiden Kupplungen 31, 32 synchron geöffnet werden. Nun liegt die aus der Figur 2b ersichtliche konventionelle Konfiguration der Propulsionsanlagen 1, 2 vor, bei der jeder Antriebsmotor 11, 21 gesondert und mit maximaler Leistung über die Hauptantriebswelle 12, 22 und das jeweilige Oberwassergetriebe 14, 24 bei geschlossener Kupplung 13, 23 den jeweils zugeordneten Propeller 10, 20 direkt und unmittelbar antreibt.

Anstelle der Nutzung des Antriebsmotors 11 der Propulsionsanlage 1 für den gemeinsamen Antrieb der Propeller 10, 20 mittels des Antriebsstranges 3 kann auch der Antriebsmotor 21 der Propulsionsanlage 2 verwendet werden, da auch der Antrieb der Propulsionsanlage 1 über die Kupplung 13 abgekuppelt werden kann. Somit kann beispielsweise auch beim Ausfall des Antriebsmotors 11 das Schiff voll manövrierfähig mit beiden Propellern 10, 20 vom Antriebsmotor 21 der Propulsionsanlage 2 angetrieben werden.

Gleichermaßen kann auch die gesamte Auslegung des Antriebssystems spiegelbildlich erfolgen und anstelle des Antriebsmotors 21 der Antriebsmotor 11 mit einem Nebenaggregat 4 bzw. Nebenantrieb versehen sein. Sämtliche vorangehenden Erläuterungen gelten dann entsprechend unter Austausch der Antriebsmotors 11 durch 21 und umgekehrt 21 durch 11.

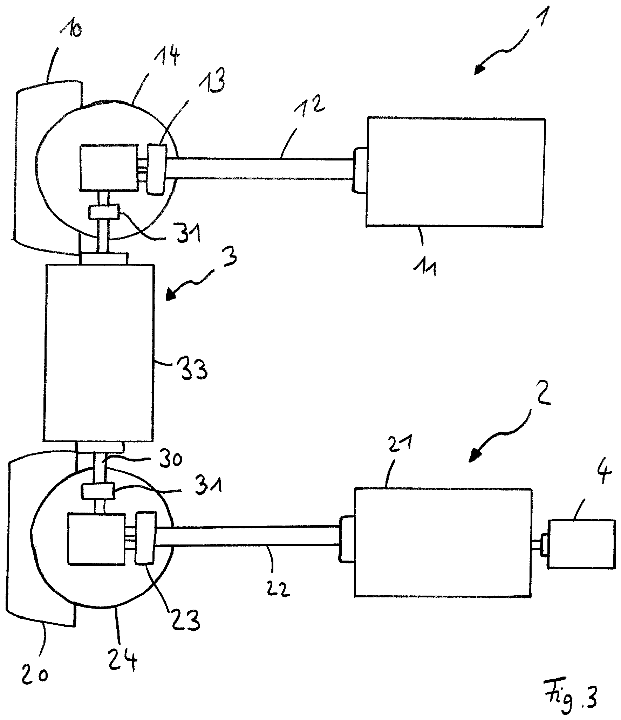

Im Ausführungsbeispiel der Figur 3 ist eine gegenüber dem vorangehend erläuterten Ausführungsbeispiel gemäß Figuren 1 und 2a bis 2b abweichende Ausführungsform dargestellt, bei der gleiche Teile gleiche Bezugsziffern aufweisen und zur Vermeidung von Wiederholungen nicht nochmals gesondert erläutert werden, sofern dies nicht zum Verständnis der Ausführungsform erforderlich ist.

Im Unterschied zum Ausführungsbeispiel gemäß Figur 1 weist das Ausführungsbeispiel gemäß der Figur 3 im Bereich des schaltbaren Antriebsstranges 3 einen zusätzlich auf die Antriebswelle 30 aufgebrachten Antriebsmotor 33, hier einen Elektromotor auf, der entsprechende Antriebsleistung auf die Antriebswelle 30 aufbringen kann.

Wenn das Antriebssystem in einer aus der Figur 2a ersichtlichen Konfiguration mit nur einem zum Antrieb beider Propeller 10, 20 über den Antriebsstrang 3 gekoppelten Antriebsmotor 11 betrieben wird, kann über den Antriebsmotor 33 zusätzliches Drehmoment zu etwa gleichen Teilen in die Oberwassergetriebe 14, 24 zum Antrieb der Propeller 10, 20 eingebracht werden.

Ferner besteht die Möglichkeit, abweichend von der Ausgestaltung gemäß Figur 2a auch die Kupplung 13 zu öffnen, sodass beide Antriebsmotoren 11, 21 abgekuppelt sind. In diesem Falle kann über den Elektromotor 33 ein synchroner rein elektrischer Antrieb beider Propeller 10, 20 erfolgen, sodass das Antriebssystem auch einen Hybridmodus mit rein elektrischer Fahrweise ermöglicht, der beispielsweise in Binnenhäfen aus Emissionsschutzgründen vorteilhaft oder gefordert ist.

Sofern der Elektromotor 33 überdies als Motor/Generator ausgeführt ist, besteht bei eingekuppeltem Antriebsstrang 3 und Antrieb über einen oder beide Antriebsmotoren 11, 21 die Möglichkeit, im Antriebsstrang 3 elektrische Energie zu erzeugen, die beispielsweise zum Laden der Batterien des Schiffes für einen späteren rein elektrischen Antrieb genutzt werden kann.

Im Rahmen der Erfindung wird durch die geringfügige bauliche Modifikation des schaltbaren Antriebsstranges 3 zwischen den Oberwassergetrieben 14, 24 ein Antriebssystem geschaffen, welches flexibel entsprechend den jeweiligen Anforderungen des Schiffes betrieben werden kann, wobei insbesondere im zeitlich deutlich überwiegenden Teillastbereich eine wesentlich wirtschaftlichere Betriebsweise ermöglicht ist, und ohne wesentliche Erhöhung der Komplexität auch ein Hybridantrieb sowie der Antrieb von Nebenaggregaten, beispielsweise Feuerlöschausrüstung realisiert werden kann. Angesichts des erzielbaren Mehrnutzens sind die erforderlichen Mehrkosten der erfindungsgemäßen Ausgestaltung äußerst gering und haben nur geringen Einfluss auf den Raumbedarf des Antriebssystems, sodass auch die Implementierung in räumlich stark begrenzten Schiffen, wie Schleppern, problemlos möglich ist.

Erfindungsgemäß, ist in dem Antriebsstrang 3 beispielsweise in mittiger Position ein Wendegetriebe 5 vorgesehen, welches in der Figur 1 strichliert angedeutet ist und die zur Ausbildung des Antriebsstranges 3 verwendete Antriebswelle 30 in zwei beidseits des Wendegetriebes 5 zu jeweils einem Oberwassergetriebe 14 bzw. 24 verlaufende Abschnitte unterteilt. Ein solches an sich bekanntes Wendegetriebe 5 sorgt an beiden Abschnitten für eine Drehrichtungsumkehr, sodass im Ergebnis beide Oberwassergetriebe 14 in über den Antriebsstrang 3 gekoppelten Zustand mit übereinstimmender Drehrichtung angetrieben werden.

Ein solches Wendegetriebe 5 kann beispielsweise in koaxialer Ausführung oder mit Wellen mit Achsversatz ausgebildet sein und Kegelräder und/oder Zylinderräder umfassen.

Darüber hinaus kann das Wendegetriebe 5 mittels weiterer, hier nicht dargestellter Schaltkupplungen bei Nichtgebrauch stillgelegt werden, um unnötige Planschverluste bei Nichtgebrauch zu vermeiden.

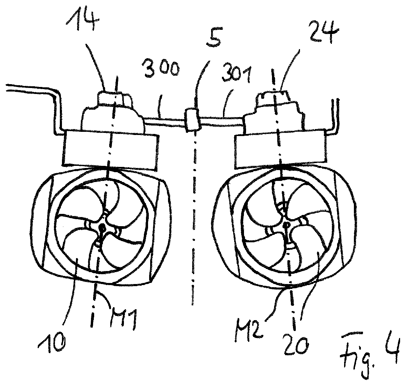

Schließlich bietet ein solches Wendegetriebe 5 die Möglichkeit, die an Schiffsrümpfen häufig vorzufindende geneigte Anordnung der Propulsionsanlagen bei Betrachtung in Schiffslängsachse auszugleichen. Aus der Figur 4 ist schematisch die Heckansicht eines solchen Schiffes dargestellt, bei dem durch die Rumpfgeometrie die Mittelachsen M1, M2 der beiden Propulsionsanlagen mit Propeller 10,20 und Oberwassergetrieben 14, 24 etwa um 12° geneigt zueinander angeordnet sind.

Das Wendegetriebe 5 ist etwa mittig zwischen den Oberwassergetrieben 14, 24 angeordnet und jeweils über Gelenkwellen 300, 301 mit den Oberwassergetrieben 14, 24 zur Ausbildung des Antriebsstranges 3 verbunden. Die Neigung der Propulsionsanlagen zueinander wird hierbei durch die Gelenkwellen 300, 301 am Wendegetriebe 5 auf einfache Weise ausgeglichen.

## Patentansprüche

1. Antriebssystem eines Schiffes, umfassend mindestens zwei Propulsionsanlagen (1, 2), wobei jede Propulsionsanlage (1, 2) einen Propeller(10, 20) sowie einen Antriebsmotor (11, 21) mit einem nachgeschalteten Oberwassergetriebe (14, 24) zum Antrieb des Propellers (10, 20) aufweist, wobei jeder Antriebsmotor (11, 21) über eine schaltbare Kupplung (13, 23) mit dem zugeordneten Oberwassergetriebe (14, 24) verbindbar und entkoppelbar ist und zwischen den Oberwassergetrieben (14, 24) ein schaltbarer Antriebsstrang (3) vorgesehen ist, mittels dessen die Oberwassergetriebe (14, 24) in einem Schaltzustand koppelbar und gemeinsam antreibbar und in einem anderen Schaltzustand entkoppelbar sind, wobei der Antriebsstrang (3) als Antriebswelle (30) mit synchron schaltbaren Kupplungen (31, 32) zwischen den Oberwassergetrieben (14, 24) und der Antriebswelle (30) ausgebildet ist, **dadurch gekennzeichnet, dass** der Antriebsstrang (3) ein Wendegetriebe (5) zur Drehrichtungsumkehr aufweist, so dass beide Oberwassergetriebe (14, 24) in über den Antriebsstrang (3) gekoppelten Zustand in gleichem Drehsinn angetrieben werden.

2. Antriebssystem nach Anspruch 1, **dadurch gekennzeichnet, dass** die Antriebswelle (30) mit einem mit der Antriebswelle (30) in Wirkverbindung stehenden Antriebsmotor (33) ausgerüstet ist.

3. Antriebssystem nach einem der Ansprüche 1 oder 2, **dadurch gekennzeichnet, dass** bei über den Antriebsstrang (3) verbundenen Oberwassergetrieben (14, 24) ein Antriebsmotor (11) mit dem zugeordneten Oberwassergetriebe (14) verbunden ist und die Oberwassergetriebe (14, 24) gemeinsam antreibt und der andere Antriebsmotor (21) entkoppelt ist.

4. Antriebssystem nach Anspruch 3, **dadurch gekennzeichnet, dass** mittels des entkoppelten Antriebsmotors (21) ein Nebenaggregat (4) antreibbar ist.

5. Antriebssystem nach Anspruch 4, **dadurch gekennzeichnet, dass** als Nebenaggregat (4) eine Pumpe oder ein Generator vorgesehen ist.

6. Antriebssystem nach einem der Ansprüche 1 bis 5, **dadurch gekennzeichnet, dass** die Propulsionsanlagen (1, 2) jeweils als Ruderpropeller ausgebildet sind.

7. Antriebssystem nach einem der Ansprüche 1 bis 6, **dadurch gekennzeichnet, dass** das Schiff einen entlang einer Wasserlinie im Wasser schwimmenden Schiffsrumpf aufweist und der Propeller (10, 20) jeder Propulsionsanlage (1, 2) unterhalb der Wasserlinie angeordnet ist und der Antriebsmotor (11, 21) sowie das Oberwassergetriebe (14, 24) innerhalb des Schiffsrumpfes angeordnet sind.

8. Antriebssystem nach einem der Ansprüche 1 bis 7, **dadurch gekennzeichnet, dass** das Wendegetriebe (5) mindestens eine schaltbare Kupplung aufweist.

9. Antriebssystem nach einem der Ansprüche 1 bis 8, **dadurch gekennzeichnet, dass** zur Ausbildung des Antriebsstranges (3) das Wendegetriebe (5) über Gelenkwellen (300, 301) mit den Oberwassergetrieben (14, 24) verbindbar ist.

## Claims

1. Drive system for a ship, comprising at least two propulsion units (1, 2), wherein each propulsion unit (1, 2) has a propeller (10, 20) and a drive engine (11, 21) with an above-water transmission (14, 24) connected downstream for driving the propeller (10, 20), wherein each drive engine (11, 21) can be connected to and decoupled from the associated above-water transmission (14, 24) by a switchable clutch (13, 23) and, between the above-water transmissions (14, 24), a switchable drive train (3) is provided by means of which, in one switching state, the above-water transmissions (14, 24) can be coupled and driven jointly and in another switching state can be decoupled from each other, wherein the drive train (3) is formed as a drive shaft (30) with synchronously switchable clutches (31, 32) between the above-water transmissions (14, 24) and the drive shaft (30), **characterised in that** the drive train (3) has a reversing gear (5) for reversing the direction of rotation, so that both above-water transmissions (14, 24) are driven in the same direction of rotation when coupled via the drive train (3).

2. Drive system according to claim 1, **characterised in that** the drive shaft (30) is provided with a drive engine (33) operatively connected to the drive shaft (30).

3. Drive system according to any one of claims 1 or 2, **characterised in that** when the above-water transmissions (14, 24) are connected via the drive train (3), one drive engine (11) is connected to the associated above-water transmission (14) and drives the above-water transmissions (14, 24) jointly while the other drive engine (21) is decoupled.

4. Drive system according to claim 3, **characterised in that** an auxiliary unit (4) is driven by the decoupled drive engine (21).

5. Drive system according to claim 4, **characterised in that** a pump or a generator is provided as the auxiliary unit (4).

6. Drive system according to any one of claims 1 to 5, **characterised in that** the propulsion units (1, 2) are each formed as a rudder propeller.

7. Drive system according to any one of claims 1 to 6, **characterised in that** the ship has a hull floating in the water along a water line and the propeller (10, 20) of each propulsion unit (1, 2) is arranged under the water line and the drive engine (11, 21) and the above-water transmission (14, 24) are arranged inside the hull.

8. Drive system according to any one of claims 1 to 7, **characterised in that** the reversing gear (5) has at least one switchable clutch.

9. Drive system according to any one of claims 1 to 8, **characterised in that** to form the drive train (3), the reversing gear (5) can be connected to the above-water transmissions (14, 24) via universal shafts (300, 301).

## Revendications

1. Système d'entraînement d'un navire, comprenant au moins deux installations de propulsion (1, 2), dans lequel chaque installation de propulsion (1, 2) présente une hélice (10, 20) ainsi qu'un moteur d'entraînement (11, 21) avec une transmission au-dessus de l'eau (14, 24) montée en aval pour l'entraînement de l'hélice (10, 20), dans lequel chaque moteur d'entraînement (11, 21) peut être relié et découplé par le biais d'un couplage (13, 23) commutable à la transmission au-dessus de l'eau (14, 24) associée et un train d'entraînement (3) commutable est prévu entre les transmissions au-dessus de l'eau (14, 24), au moyen duquel les transmissions au-dessus de l'eau (14, 24) peuvent être couplées et entraînées ensemble dans un état de commutation et peuvent être découplées dans un autre état de commutation, dans lequel le train d'entraînement (3) est réalisé comme arbre d'entraînement (30) avec des couplages (31, 32) commutables de manière synchrone entre les transmissions au-dessus de l'eau (14, 24) et l'arbre d'entraînement (30), **caractérisé en ce que** le train d'entraînement (3) présente un inverseur (5) pour l'inversion du sens de rotation de sorte que les deux transmissions au-dessus de l'eau (14, 24) soient entraînées dans un état couplé par le biais du train d'entraînement (3) dans le même sens de rotation.

2. Système d'entraînement selon la revendication 1, **caractérisé en ce que**l'arbre d'entraînement (30) est équipé d'un moteur d'entraînement (33) se trouvant en liaison active avec l'arbre d'entraînement (30).

3. Système d'entraînement selon l'une quelconque des revendications 1 ou 2, **caractérisé en ce que**pour des transmissions au-dessus de l'eau (14, 24) reliées par le biais du train d'entraînement (3), un moteur d'entraînement (11) est relié à la transmission au-dessus de l'eau (14) associée et entraîne les transmissions au-dessus de l'eau (14, 24) ensemble et l'autre moteur d'entraînement (21) est découplé.

4. Système d'entraînement selon la revendication 3, **caractérisé en ce qu**'une unité auxiliaire (4) peut être entraînée au moyen du moteur d'entraînement (21) découplé.

5. Système d'entraînement selon la revendication 4, **caractérisé en ce qu**'une pompe ou un générateur est prévu comme unité auxiliaire (4).

6. Système d'entraînement selon l'une quelconque des revendications 1 à 5, **caractérisé en ce que**les installations de propulsion (1, 2) sont réalisées respectivement comme hélice de gouvernail.

7. Système d'entraînement selon l'une quelconque des revendications 1 à 6, **caractérisé en ce que**le navire présente une coque flottant dans l'eau le long d'une ligne d'eau et l'hélice (10, 20) de chaque installation de propulsion (1, 2) est agencée en dessous de la ligne d'eau et le moteur d'entraînement (11, 21) ainsi que la transmission au-dessus de l'eau (14, 24) sont agencés dans la coque.

8. Système d'entraînement selon l'une quelconque des revendications 1 à 7, **caractérisé en ce qu**el'inverseur (5) présente au moins un couplage commutable.

9. Système d'entraînement selon l'une quelconque des revendications 1 à 8, **caractérisé en ce qu**e l'inverseur (5) peut être relié par le biais d'arbres articulés (300, 301) aux transmissions au-dessus de l'eau (14, 24) pour la réalisation du train d'entraînement (3).
